Europäisches Patentamt

European Patent Office

Office européen des brevets

(11) Publication number: **0 352 617**

**A1**

# EUROPEAN PATENT APPLICATION

(21) Application number: **89113250.8**

(22) Date of filing: **19.07.89**

(51) Int. Cl.4: **H01M 2/16 , H01M 6/50 , H01M 6/16**

(30) Priority: **25.07.88 US 223811**

(43) Date of publication of application:
**31.01.90 Bulletin 90/05**

(84) Designated Contracting States:
**DE FR GB**

(71) Applicant: **EASTMAN KODAK COMPANY**
**343 State Street**
**Rochester New York 14650(US)**

(72) Inventor: **Steklenski, David John c/o**
**EASTMAN KODAK COMPANY**
**Patent Department 343 State Street**
**Rochester New York 14650(US)**

(74) Representative: **Brandes, Jürgen, Dr.rer.nat. et al**
**Thierschstrasse 8**
**D-8000 München 22(DE)**

(54) **Fusible separators for lithium batteries.**

(57) A separator assembly for electrochemical cells comprising a porous or microporous support bearing a layer of a non-woven fusible fabric is disclosed.

EP 0 352 617 A1

## FUSIBLE SEPARATORS FOR LITHIUM BATTERIES

The present invention relates to battery separator assemblies.

A primary concern in the design and manufacture of lithium batteries for the consumer market is safety. This is especially true of so-called "high rate" cells designed to operate at high drain rates and deliver substantial power. When such a cell is shorted across its terminals, the temperature of the cell rises rapidly in response to the high current flow and the chemical reaction occurring at the cathode. As the temperature rises, the chemical reaction inside the cell runs at an increasing rate generating more heat, etc. Unprotected high rate cells can quickly reach temperatures exceeding 140° C and can vent quantities of hot solvent and solvent vapor with accompanying fire hazard. Clearly steps must be taken to avoid this occurrence.

One approach involves the use of separators bearing coating which fuse as the internal temperature reaches a specified level. Another approach involves a microporous polypropylene separator which fuses on heating thus closing the path for ion flow between the cathode and anode. Because of the relatively high melting point of polypropylene, batteries protected in this fashion still reach undesirably high surface temperatures (>135° C). U.S. Patent 4,741,979 discloses the use of wax coated on non-woven fabrics. The wax fuses as cell temperature rises thereby decreasing the ionic flow between the electrodes and reducing the cell's current output.

The coating process comprises an extra step in the manufacture of the separator which must be carefully controlled to prevent loss of performance. In addition, the wax coating on the non-woven fabric provides a significant increase in separator thickness. This is undesirable since the volume taken up by the separator is unavailable for filling with active cell materials (fuel or electrolyte).

The present invention provides a separator assembly for electrochemical cells comprising a porous support layer bearing a layer of a non-woven fusible fabric.

This invention provides effective and consistent cell safety while overcoming some of the problems associated with the above prior art. The need to wax-coat fibers of a non-woven fabric is completely eliminated. The non-woven fabric layer is made from a wax or polymer melting in the range of 80 to 150° C, preferably in the range of 90-120° C. The support layer is a porous film or a second non-woven fabric having a melting point at least 10° C higher than that of the fusible layer. The fusible layer has a weight preferably in the range of 10-30 g/m² and a thickness of less than 0.005".

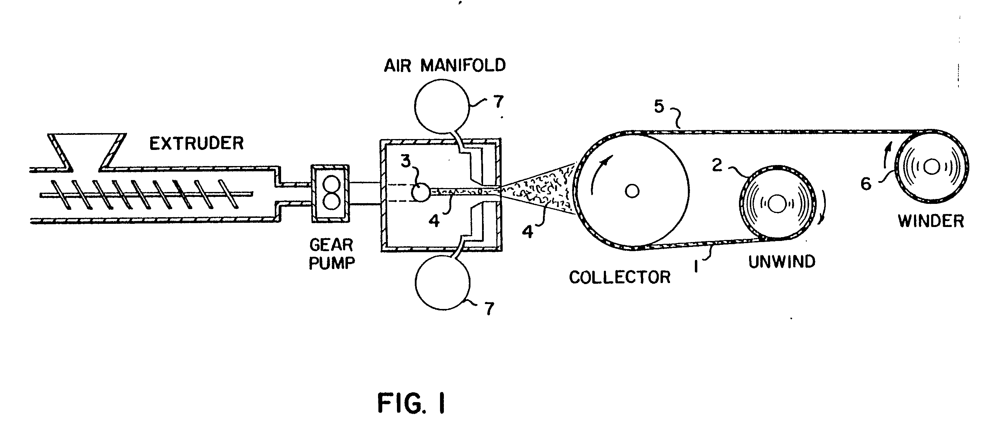

The figure is a schematic of one method of making a separator assembly of the invention.

The separator assembly must be sufficiently porous to allow a continuous flow of ions between the anode and the cathode. This means that both the support and the non-woven fusible material are porous. The materials from which the separator assembly are made must also be a) insoluble in the selected electrolyte, b) electrically insulating and c) capable of physically separating the anode and the cathode to prevent internal shorting.

The separator assembly comprises two layers, a support layer and a non-woven, fusible layer. A wide variety of materials can be used as the support of the separator assembly. Of course the supports must have a melting point greater than the fusing temperature of the fusible non-woven layer, i.e. greater than 80 to 150° C, depending on the fusing temperature of the non-woven layer. Especially useful are microporous polymerics, such as Celgard 2500 microporous polypropylene. Also useful as supports are non-woven polymeric fabrics, such as Kiara™ 9120 of 9123 (60% polyester, 40% polyethylene, fabric density of, 7 g/m² and 14 g/m² respectively, Chicopee Industrial Division, New Brunswick, New Jersey), and Pellon polyester with a fabric density of 20.9 g/m². Especially useful are non-woven fabrics made from polypropylene.

The individual fibers of a non-woven fabric are joined in a random pattern. As the temperature inside the cell exceeds the melting point of polymer from which the fabric is made, the fusible fabric melts and flows resulting in a substantial change in the dimensions of the fabric. The pores of the fabric close and it essentially ceases to exist as a fabric.

There are many potential embodiments of this concept. One embodiment is the combination of the fusible non-woven fabric with a polypropylene microporous film support. The microporous film provides a high degree of strength to the composite as well as minimizing the overall thickness of the final separator. The fusible non-woven fabric can be bonded to the microporous film by many known methods. In another embodiment, the fusible non-woven fabric could be formed by a melt-blowing process using the microporous film as a support. This would provide the desired two-layer composite without the use of any subsequent bonding steps. Likewise, a second non-woven fabric, not designed to be fusible, could be used as the support for the non-woven fusible fabric.

The non-woven fusible fabric can be prepared by many techniques including spinning of fibers followed by the formation of non-woven fabrics by carding or spun-bonding techniques. The melt-blowing process is preferable because it allows the fabric to be formed directly on the surface of the supporting layer, thus providing manufacturing advantages. The melt-blowing process is well known being described in Novel Melt-Blown Research Findings, L.C. Wadsworth et al, NonWovens Industry, vol. 17, no. 11, page 44 et seq., 1986. The figure is a schematic of one such process in which the non-woven fusible fabric is deposited directly on a microporous support. In the process a microporous film support 1 is unwound from a spool 2 and passed directly in front of a die 3 where the fibrous non-woven fabric 4 is impinged directly on the support by air manifolds 7. The composite separator 5 is then wound onto spool 6. To achieve maximum versatility and ease of process, we chose to manufacture melt-blown fusible fabrics as described hereinbefore. This process is capable of producing fabrics with a wide range of weights and textures, and can prepare fibers in very small diameters. In addition, a variety of polymeric or wax materials in the desired melting range can be made or are available for blowing. The separator assembly would be useful in almost any battery, particularly high rate batteries comprising a lithium anode, an electrolyte and a cathode.

The electrolyte can comprise, for example, a lithium salt dissolved in a solvent mixture comprising butyrolactone, propylene carbonate, dimethoxyethane, dioxolane, tetrahydrofuran, 1,2-dimethoxypropane or any of the other organic solvents conventionally used in forming batteries having lithium anodes. Lithium salts include lithium trifluoromethane sulfonate ($CF_3SO_3Li$), $LiASF_6$ and $LiBF_4$ and $LiCLO_4$ and any of the other lithium salts used in forming such electrolytes.

Useful anode materials include alkali metals (lithium, sodium and potassium), lithium-aluminum alloys, lithium-silicon alloys, lithium-boron alloys and the metals of group IA and IIA. Metals which can be used as a current collector and support include nickel, stainless steel, aluminum and titanium.

A wide variety of cathode active materials are useful in the batteries including $MnO_2$, $FeS_2$, FeS, CuO, $Bi_2O_3$ and various forms of polyfluorocarbons (i.e. $CF_x$ wherein x is an indeterminately large number).

The criteria for the choice of wax or polymer from which the non-woven fabric is made are essentially a) a melting point in the electrolyte higher than the high temperature storage specification (70°C for many batteries), but low enough to provide shutdown below the point at which the battery will cause harm, generally below 120°C maximum (mpt = 90-105°C), b) essentially no solubility in the battery electrolyte up to the upper skin temperature limits (120 to 140°C) and c) chemical inertness toward battery components. The polymer or wax preferably has to have a melt index in the appropriate range for melt blowing or fiber spinning. A sharp melting point is preferred. One would also prefer a hard material which would not smear under pressure.

Examples of useful materials for forming non-woven fusible layers used in the separator assembly are presented in Table II.

3

TABLE II

| Representative Materials for Fusible Non-Woven M Layers | | |
|---|---|---|
| | Polymer Composition | Mass 1.19g/m$^2$ |
| 1 | PE/EVA 28%VA | 53 |
| 2 | PE/EVA 18%VA | 28 |
| 3 | PE/MA 20%MA | 42 |
| 4 | PE/octene | 28 |
| 5 | PE/octene | 14 |
| 6 | LDPE | 35 |
| PE = polyethylene; EVA = ethylene vinylacetate; MA = methyl acrylate; VA = vinylacetate; LDPE = low density polyethylene | | |

Separator assemblies were made by hand to demonstrate the operability of the invention.

The selected fusible non-woven fabric had a polymer melting point range in the selected electrolyte of 80-120°C; a fabric weight in the 10-30 g/m$^2$ range. The fiber diameter and fabric thickness was minimized to the greatest extent possible consistent with acceptable electrical performance.

A fusible non-woven fabric was cut into strips and matched with a piece of Celgard 2500 microporous film support of the same size. The resulting composite was folded in half with the film support on the inside and heat sealed at the fold to join the two materials.

For safety testing, cells with 88.9mm (3.5") long cathodes were used.

The 88.9mm (3.5") cell format is easily built and quite reproducible in its behavior. For the cells used in this study, cathodes comprising $FeS_2$, carbon, Teflon® (PTFE), and $TiO_2$ (87/4/6/3) were coated using paste methodology with Methocel (available from Dow Chemical Corp.) Carbopol (available from B.F. Goodrich) as coating aids. After calendaring to a thickness of about 0.45-0.48mm (18-19 mls) the cathodes were punched to dimensions of 40.64 x 88.9mm (1.6" x 3.5"). Cathodes storing from 10,500 to 13,000 (5.3-6.3 g dried weight) coulombs were used in the tests. A stainless steel tab (SS304 foil, 19 x 3.17mm x 0.10mm (0.75" x 0.125" x 0.004") was welded to the center of the long side of the cathode. The cathode dried for 2 hours at 315°C in vacuum.

The anodes for these cells consisted of two pieces of 0.254mm (0.010") lithium foil laminated onto the two sides of a piece of .025mm (1 mil) SS304 foil (SS 304 foil 45.7mm x 158.7mm x .025mm (1.8" x 6.25" x 0.001"); Lithium-40.6mm x 82.5mm x 2.54mm (1.6" x 3.25" x 0.10") and 45.7mm x 107.9mm x 2.54mm (1.6" x 4.25" x 0.10"). The separator composites previously described were cut to a width of 45.7mm (1.8") and a length of about 101. 6mm (4"). Handling of the lithium and dried cathodes and all cell assembly operations was carried out in a dry room maintained at 0.5-2% RH.

Cells were assembled using the following conventional procedure. The foil tongue of the anode assembly was engaged into a slot in a winding pin which had been previously loaded into a cell winder and one full turn taken. The cathode, wrapped in separator such that the non-woven material faced out, was inserted into the nip created in the anode wind and the cell wound up. The completed jelly roll assembly was then inserted into an AA-size can which contained a Teflon® insulator in the bottom to prevent shorting. The can side was beaded and the tab from the cathode was welded to the rivet of the top assembly. Before filling, the cell was checked to be certain that the cathode to anode resistance was >20 megohm. The cell was filled under vacuum with 2.5-2.8 g of electrolyte (1M $LiCF_3SO_3$ in 1:1 propylene carbonate:1,2-dimethoxyethane) and the top assembly crimped into place. In general, the cells received no further treatment before short circuit testing. If the tests could not be conducted on the day on which the cells were

4

assembled, they were predischarged at 1 amp (galvanostatically) to remove 3% of the coulombs stored. Metal foil tabs were welded onto the cathode and anode ends of the cell assembly to allow connection for testing.

A variety of polymers were examined in fabrics of various weights in the separator assembly.

## Examples

## Control 1

A set of spirally wound Lithium/FeS$_2$ cells was prepared using a separator assembly comprising Chicopee 4110 (13.6 g/m$^2$ polypropylene non-woven) on a Celgard 2500 microporous film. The microporous film was placed next to the cathode and the non-woven was placed next to the anode. In all of the cells, 1M LiCF$_3$SO$_3$ was dissolved in an equal volume (1:1) solution of propylene carbonate (PC):1,2-dimethoxyethane (DME) as the electrolyte. After assembly and filling with electrolyte, the cells were sealed with a polypropylene top held in place by crimping the metal can edge over the plastic top to form a tight seal. To determine the behavior of the cells under short circuit conditions, the cells were placed across a resistance of 0.04 ohms. The current generated by the cell was monitored by a Fluke Y8100 DC/AC current probe. The temperature on the outer skin of the cell was measured using a type T, surface mount thermocouple. Both temperature and current were recorded during the test. The results of several individual cell runs are listed below.

| Cell Number | Maximum Skin Temperature |
|---|---|
| 1 | 138°C |
| 2 | 135°C |
| 3 | 142°C |
| 4 | 137°C |

## Control 2 (Two Cells in Series)

Two cells made as above were connected in series, the thermocouple placed between them, and the two cells taped together, side-to-side. The series connected cells were tested and monitored as for the individual cells of example 1. During the test, the skin temperature rose rapidly to 136°C whereupon the tops of the two cells were forced free of the crimped seals and the cells vented electrolyte.

## Example 1 - Individual Cells having Separator Assemblies of Invention

Cells identical to those of Control 1, except for the non-woven portion of the separator, were prepared and tested as described in Control 1. In one set of cells, a 28 g/m$^2$ (1 oz/yd$^2$) melt-blown separator of ASPUN 6806 (poly(ethyleneoctene)copolymer from Dow Chemical) was used as the fusible non-woven fabric. When short circuit tested, cells incorporating the fusible separator reached a maximum skin temperature of only 113°C. Similar results were obtained with other fusible polymers as is shown in Table IV below.

TABLE IV

| Summary of Separator Assembly Results with Fusible Non-Woven Layer | | | | |
|---|---|---|---|---|
| Cell Number | Polymer Composition | Weight g/yd$^2$ | Flow Pt in PC:DME | Max Skin Temperature |
| 1 | PE/EVA 28%VA | 53 | 60-62°C | 66-67°C |
| 2 | PE/EVA 18%VA | 28 | 75-77°C | 82-86°C |
| 3 | PE/MA 20%MA | 42 | 70-72°C | 77-78°C |
| 4 | PE/octene | 28 | 110-120°C | 113-115°C |
| 5 | PE/octene | 14 | 110-120°C | 116-118°C |
| 6 | LDPE | 35 | 88-92°C | 95-98°C |

In each case tested, the truncation of the current and temperature profiles of the cells was sharp, fast, and effective. Examination of the separators from disassembled cells showed that in most cases, the non-wovens had fused to become an impervious membrane or had fused to the 2500 microporous film. As one would expect, the trend in maximum-skin temperature followed the melting point of the fabric.

The 16.95 g/m$^2$ (0.5 oz/yd$^2$) (polyethylene/octene) material is in a light-weight fabric having a higher than desired melting point, but still provides shutdown of the cell within the specified limit of 120°C. In addition, no effect on the spike or initial cell currents was noted. The performance of the low density PE non-woven, melting within the desired range, provided excellent temperature control.

The 16.95 g/m$^2$ (0.5 oz/yd$^2$) fabric weight is sufficient to provide the necessary thermal control. Choice of fiber diameters can be manipulated to provide specified weights. Fine fibers, yielding a fabric with high porosity through large numbers of very small openings, will contribute to the overall integrity of the separator assembly. Larger diameter fibers might respond in the opposite manner, requiring more support from a second layer, but providing better performance. Optimization of both fiber diameter and the way the fibers lie in the sheet can be achieved. Calendaring to reduce fabric thickness is another approach.

Example 2 - Cells in Series with Fusible Separator

The excellent results obtained for cells containing the polyethylene/octene and LDPE-based fabrics led to their testing in a series-connected cell pair. The use of the cell pair, bound together, provides for greater power delivery and much faster heat-up than obtained with single cells. Control cells tested in this fashion (see Control Example 2) routinely reach temperatures of 136-142°C and in almost all cases, both of the cells vented electrolyte. The test conducted with the 16.95 g/m$^2$ (0.5 oz/yd$^2$) fabric reached a maximum skin temperature in the 125-129°C range. Excellent shutdown occurred. The LDPE fabric, with its lower melting point, limited the skin temperature to 105-107°C with no venting or leakage of electrolyte.

## Claims

1. A separator assembly for electrochemical cells comprising a porous support bearing a layer of a non-woven fusible fabric.

2. The separator assembly of claim 1 wherein the fusible non-woven fabric fuses in the chosen electrolyte at a temperature in the range 70 to 140°C.

3. The separator of claim 1 wherein the fusible non-woven material fuses in the chosen electrolyte at a temperature between 80 and 105°C.

4. The separator of claim 2 wherein the fusible non-woven fabric has a weight in the range of 10-30 g/m$^2$.

5. The separator of claim 1 wherein the support is a microporous film having a melting point at least 10°C higher than that of the fusible non-woven fabric.

6. The separator of claim 1 wherein the support is a second non-woven fabric whose melting point in the electrolyte is a minimum of $10°C$ higher than that of the fusible fabric.

7. The separator assembly of claim 1 wherein the non-woven fusible material is formed from low density polyethylene.

8. A battery comprising an anode, a cathode, an electrolyte and a separator assembly between the anode and the cathode wherein the separator assembly comprises a porous or microporous support bearing a layer of a non-woven fusible fabric.

9. The battery of claim 8 comprising a lithium anode; a cathode selected from the group consisting of $MnO_2$ and $FeS_2$; and separator assembly according to claims 2, 3, 4, 5 or 6.

AIR MANIFOLD

EXTRUDER

GEAR
PUMP

3

4

4

7

7

5

2

6

COLLECTOR

1

UNWIND

WINDER

EP 0 352 617 A1

FIG. I

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,D | EP-A-0 246 866 (EASTMAN KODAK CO.) * Page 3; lines 11-31, claims 7,8 * & US-A-4 741 979 | 1-3,5-6,8-9 | H 01 M 2/16 H 01 M 6/50 H 01 M 6/16 |
| Y | PATENT ABSTRACTS OF JAPAN, vol. 9, no. 106 (E-313)[1829], 10th May 1985; & JP-A-60 52 (FUJI DENKI KAGAKU K.K.) 05-01-1985 * Abstract * | 1-3,5-6,8-9 | |
| A | PATENT ABSTRACTS OF JAPAN, vol. 11, no. 77 (E-487)[2524], 7th March 1987; & JP-A-61 232 560 (FUJI ELECTROCHEM CO. LTD.) 16-10-1986 | 1-3,7-9 | |
| A,D | NONWOVENS TECHNOLOGY, vol. 17, no. 11, November 1986, pages 44-51; L.C. WADSWORTH et al.: "Novel melt blown research findings" * page 44; line 4, right-hand column * | 1,4 | |
| A | PATENT ABSTRACTS OF JAPAN, vol. 9, no. 295 (E-360)[2018], 21st November 1985; & JP-A-60 136 161 (NIPPON VILENE K.K.) 19-07-1985 | 1-3,6-9 | TECHNICAL FIELDS SEARCHED (Int. Cl.5) H 01 M |
| A | EP-A-0 201 875 (GRACE & CO.) * column 1; page 14, line 36; page 22, line 34 * | 1-3,5-9 | |
| A | US-A-4 399 202 (IKEDA et al.) * Column 2, line 51 * | 6 | |

The present search report has been drawn up for all claims

| Place of search | Date of completion of the search | Examiner |
|---|---|---|
| THE HAGUE | 29-09-1989 | CZECH B.P. |

EPO FORM 1503 03.82 (P0401)